(19) **Europäisches Patentamt**

**European Patent Office**

**Office européen des brevets**

(11) **EP 1 035 474 A2**

(12) **EUROPÄISCHE PATENTANMELDUNG**

(43) Veröffentlichungstag:
13.09.2000 Patentblatt 2000/37

(51) Int. Cl.⁷: **G06F 11/34**

(21) Anmeldenummer: **00104268.8**

(22) Anmeldetag: **01.03.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.03.1999 DE 19910859**

(71) Anmelder:
**SIEMENS AKTIENGESELLSCHAFT
80333 München (DE)**

(72) Erfinder:
- **Köninger, Reinhard
  45894 Gelsenkirchen (DE)**
- **Gericke, Harald
  46119 Oberhausen (DE)**
- **Hoffmann, Christian
  58452 Witten (DE)**

(54) **Verfahren zur Systemlastmessung in prozessorgesteuerten Systemen**

(57) Zur Messung der Systemlast eines prozessorgesteuerten Systems werden während eines Meßzeitintervalls (M) sowohl periodisch gebildete Signale (SZ) eines Systemzeitgebers als auch in Leerlaufphasen des prozessorgesteuerten Systems periodisch stattfindende Zählereignisse (ZE), z.B. die Schleifendurchläufe einer Zählschleife innerhalb eins Idle-Prozesses, gezählt. Aus der ein Maß für die Länge des Meßzeitintervalls (M) darstellenden Anzahl (D) der gezählten Systemzeitgebersignale und der ein Maß für die Verweildauer des prozessorgesteuerten Systems im Leerlaufzustand darstellenden Anzahl (N) der gezählten Zählereignisse wird anschließend die Systemlast bestimmt.

FIG 3

EP 1 035 474 A2

**Beschreibung**

Die Erfindung betrifft ein Verfahren zur Systemlastmessung in einem prozessorgesteuerten System, wie z.B. einem Computersystem, einer Vermittlungseinrichtung eines Kommunikationssystems, einem Netzknoten eines Kommunikationsnetzes oder einem ähnlichen Steuersystem. Als Systemlast wird in diesem Zusammenhang die zeitliche Auslastung des prozessorgesteuerten Systems verstanden, d.h. der Anteil der Zeit, den das prozessorgesteuerte System zur Ausführung von Nutzprozessen, wie z.B. Anwendungs- oder Steuerprogrammen, benötigt und nicht im Leerlaufzustand ist.

Die Systemlast ist ein wichtiger Indikator dafür, wie schnell ein prozessorgesteuertes System auf eine Anforderung zur Ausführung eines Nutzprozesses reagieren kann. Solange ein prozessorgesteuertes System im Leerlaufzustand ist, kann es Anforderungen zur Ausführung von Nutzprozessen in der Regel unverzüglich erfüllen. Tritt eine solche Anforderung jedoch während der Ausführung eines früher angeforderten Nutzprozesses auf, ist erst das Ende des laufenden Nutzprozesses abzuwarten oder dieser zu unterbrechen. Dadurch wird entweder der auszuführende oder der laufende Nutzprozeß verzögert. Im allgemeinen ist die Verzögerung dabei um so länger, je geringer der Zeitanteil der Leerlaufphasen, d.h. je höher die Systemlast ist. Derartige, durch eine hohe Systemlast bedingte Verzögerungen können insbesondere bei Echtzeitsystemen, wie z.B. Vermittlungseinrichtungen zur Echtzeitkommunikation, zu erheblichen Ablaufstörungen führen.

Eine zuverlässige und genaue Bestimmung der Systemlast ist daher insbesondere bei Echtzeitsystemen ein wichtiges Element für eine Überwachung des Betriebszustandes.

Aus der Patentschrift US 4126895 ist bekannt, die Auslastung eines Prozessors dadurch zu messen, daß in periodischen Zeitabständen geprüft wird, ob der Prozessor durch einen Nutzprozeß belegt ist oder frei ist. Der Anteil der Zustandsprüfungen, in denen der Prozessor im Belegtzustand angetroffen wird, ergibt dabei die Systemlast. Für eine genaue Bestimmung der Systemlast in einem zeitgemäßen Prozessorsystem mit einer Vielzahl asynchron zu verarbeitender Nutzprozesse ist diese Methode jedoch nur wenig geeignet. Da die Genauigkeit der Systemlastbestimmung bei dieser Methode durch die Zeitabstände der Zustandsprüfungen bestimmt ist, müßte für eine genaue Bestimmung der Systemlast der Programmfluß sehr häufig für eine Zustandsprüfung unterbrochen werden, was sich ungünstig auf die Systemlast auswirken würde.

Die Aufgabe der vorliegenden Erfindung besteht darin, ein einfach implementierbares Verfahren zur Systemlastmessung in prozessorgesteuerten Systemen anzugeben, mit dem sich eine hohe Meßgenauigkeit erzielen läßt und das insbesondere auch zur Systemlastmessung in Echtzeitsystemen geeignet ist.

Gelöst wird diese Aufgabe durch ein Verfahren mit den Merkmalen des Patentanspruchs 1.

Beim erfindungsgemäßen Verfahren wird die Systemlast eines prozessorgesteuerten Systems im wesentlichen mittels zweier Zähler bestimmt. Während der erste dieser Zähler dazu dient, die Dauer eines Meßzeitintervalls zu bestimmen, wird mittels des zweiten Zählers ein Maß dafür bestimmt, wir lange das prozessorgesteuerte System während des Meßzeitintervalls im Leerlaufzustand verweilt. Aus der Dauer des Meßzeitintervalls und dem Maß für die Verweildauer im Leerlaufzustand wird schließlich ein Maß für die Systemlast bestimmt.

Die Dauer des Meßzeitintervalls wird durch Zählen von in periodischen Zeitabständen gebildeten Signalen eines Systemzeitgebers durch den ersten Zähler bestimmt. Da Systemzeitgeber in der Regel eine hohe Ganggenauigkeit aufweisen, ist auf diese Weise eine sehr genaue Bestimmung der Dauer des Meßzeitintervalls möglich. Bei den meisten Betriebssystemen ist ein Zeitgebersignale zählender Zähler bereits standardmäßig implementiert und kann vorteilhafterweise als erster Zähler für das erfindungsgemäße Verfahren genutzt werden.

Mittels des zweiten Zählers werden während des Meßzeitintervalls in Leerlaufphasen des prozessorgesteuerten Systems stattfindende Zählereignisse gezählt, wobei deren Anzahl ein direktes Maß für die Verweildauer im Leerlaufzustand ist. Die Messung der Verweildauer im Leerlaufzustand ist hierbei um so genauer, je höher die Zählfrequenz der zweiten Zählers, d.h. je kürzer die Periode der Zählereignisse ist. Da die Zählereignisse nur während der Leerlaufphasen zu zählen sind, muß eine eventuelle, aus der Durchführung der Zählung resultierende Belastung des prozessorgesteuerten Systems nicht zu Lasten von Nutzprozessen gehen. Damit kann auch eine sehr hohe Zählfrequenz für den zweiten Zähler und damit eine sehr genaue Messung realisiert werden, ohne die Verarbeitung von Nutzprozessen wesentlich zu behindern oder die Systemlast zu erhöhen.

Aufgrund einer hohen erzielbaren Genauigkeit bei der Bestimmung der Systemlast und aufgrund einer geringen Behinderung der Nutzprozeßverarbeitung kann das erfindungsgemäße Verfahren insbesondere bei Echtzeitsystemen vorteilhaft eingesetzt werden.

Vorteilhafte Ausführungsformen und Weiterbildungen der Erfindung sind in den Unteransprüchen angegeben.

Gemäß einer vorteilhaften Ausführungsform der Erfindung kann der zweite Zähler durch eine in den Leerlaufphasen ablaufende Programmschleife realisiert sein. Als Zählereignisse werden dabei die während der Leerlaufphasen stattfindenden Programmschleifendurchläufe gezählt. Vorzugsweise kann die Programmschleife ausschließlich während der Leerlaufphasen ausgeführt werden, wodurch sich eine Prüfung, ob ein Programmschleifendurchlauf in eine Leerlaufphase fällt, erübrigt. Ein ausschließliches Ausführen der Programmschleife während der Leerlaufphasen kann auf einfache Weise dadurch erreicht werden, daß die Programmschleife in einen Idle-Prozeß des prozessorgesteuerten Systems integriert wird. Ein Idle-Prozeß wird von einem Betriebssystem ausgeführt, solange kein auszuführender Nutzprozeß vorliegt. Die Beschränkung der Ausführung auf die Leerlaufphasen kann vorzugsweise dadurch realisiert werden, daß einem solchen Idle-Prozeß eine niedrigere Priorität als den auf dem prozessorgesteuerten System auszuführenden Nutzprozessen zugewiesen wird. Durch eine Integration der Programmschleife in einen Idle-Prozeß kann ein nur während der Leerlaufphasen aktiver Zähler ohne weitere Eingriffe in das Betriebssystem realisiert werden. Falls ein solcher Idle-Prozeß zudem als ein Anwenderprozeß mit höherer Priorität als ein betriebssystemeigener Idle-Prozeß realisiert ist, wird jener Idle-Prozeß in den Leerlaufphasen anstelle des betriebssystemeigenen Idle-Prozesses ausgeführt. In diesem Fall ist zur Realisierung des zweiten Zählers auch kein Eingriff in den betriebssystemeigenen Idle-Prozeß erforderlich, sondern nur ein Anmelden eines solchen AnwenderIdle-Prozesses beim Betriebssystem.

Alternativ zu einer Realisierung als Programmschleife, kann der zweite Zähler auch als Hardware-Zähleinrichtung mit einem Zählregister realisiert sein.

Gemäß einer vorteilhaften Weiterbildung der Erfindung kann der zweite Zähler mittels des ersten Zählers kalibriert werden. Zu diesem Zweck werden während einer Leerlaufphase, die mindestens ein Zeitintervall zwischen zwei Signalen des Systemzeitgebers umfaßt, die zwischen diesen Signalen stattfindenden Zählereignisse durch den zweiten Zähler gezählt. Der zeitliche Abstand dieser zur Kalibrierung genutzten Signale des Systemzeitgebers kann dabei auch mehrere Systemzeitgeberperioden betragen. Da diese Zählung nicht durch Nutzprozesse unterbrochen wird, kann aus dem Zählergebnis direkt der auf das Zeitmaß des Systemzeitgebers bezogene Zeitabstand zweier aufeinanderfolgender Zählereignisse bestimmt werden. Dieser Zeitabstand kann bei einer nachfolgenden, innerhalb eines vorgebbaren Meßintervalls erfolgenden Messung der Systemlast verwendet werden, um die Verweildauer des prozessorgesteuerten Systems im Leerlaufzustand, bezogen auf das Zeitmaß des Systemzeitgebers, zu bestimmen. Wird die Systemlast mit P, das während des Meßintervalls erhaltene Zählergebnis des ersten bzw. zweiten Zählers mit D bzw. N, die Anzahl der Systemzeitgeberperioden zwischen den zur Kalibrierung genutzten Signalen des Systemzeitgebers mit m und das bei der Kalibrierung erhaltene Zählergebnis mit K bezeichnet, kann die Systemlast nach der Rechenvorschrift $P = 1 - (m*N)/(K*D)$ bestimmt werden. Werden zur Kalibrierung des zweiten Zählers zwei unmittelbar aufeinanderfolgende Signale des Systemzeitgebers genutzt, hat m den Wert 1 und die Rechenvorschrift vereinfacht sich zu $P = 1 - N/(K*D)$. Da außer den aufgeführten Zählergebnisen keine weiteren Größen in die Rechenvorschrift eingehen, kann die Systemlast damit unabhängig von der Geschwindigkeit eines Prozessors, der Taktfrequenz des prozessorgesteuerten Systems, der Taktfrequenz des Systemzeitgebers sowie unabhängig von der Zählfrequenz des zweiten Zählers bestimmt werden. Das erfindungsgemäße Verfahren kann somit, ohne daß eine besondere Modifikation oder Anpassung erforderlich wäre, auf ganz unterschiedlichen Hardwareplattformen zur genauen Systemlastmessung eingesetzt werden.

Nach einer weiteren vorteilhaften Weiterbildung der Erfindung kann ein gemessener Wert für die Systemlast mit einem oder mehreren vorgebbaren Schwellenwerten verglichen werden und abhängig vom Vergleichsergebnis eine spezifische Systemmeldung ausgegeben werden. Durch eine solche spezifische Systemmeldung können z.B. Maßnahmen zur Verringerung der Systemlast initiiert werden, um so eine Überlastung des prozessorgesteuerten Systems zu vermeiden. Solche Maßnahmen können dann nach Absinken der Systemlast unter einen vorgegebenen Schwellenwert wieder deaktiviert werden.

Gemäß einer weiteren vorteilhaften Weiterbildung der Erfindung kann die Systemlast auch in einem oder mehreren prozessorgesteuerten Teilsystemen eines prozessorgesteuerten Systems, z.B. eines Multiprozessorsystems, bestimmt werden. Auf diese Weise kann für verschiedene Teilsysteme die jeweilige Systemlast separat erfaßt werden, wodurch sich beispielsweise ein Verarbeitungsstau oder andere Leistungsengpässe in einem oder mehreren Teilsystem des prozessorgesteuerten System lokalisieren lassen.

Ein Ausführungsbeispiel der Erfindung, bei dem das erfindungsgemäße Verfahren dazu eingesetzt wird, die Systemlast eines prozessorgesteuerten Echtzeitsystems zu bestimmen und zu überwachen, wird im folgenden anhand der Zeichnung näher erläutert.

Dabei zeigen

Fig 1 ein Flußdiagramm einer Programmschleife zur Zählung von Programmschleifendurchläufen,

Fig 2 eine grafische Veranschaulichung des zeitlichen Ablaufs einer Zählerkalibrierung,

Fig 3 eine grafische Veranschaulichung des zeitlichen Ablaufs einer typischen Systemlastmessung und

Fig 4 eine grafische Veranschaulichung einer kontinuierlichen Systemlastüberwachung.

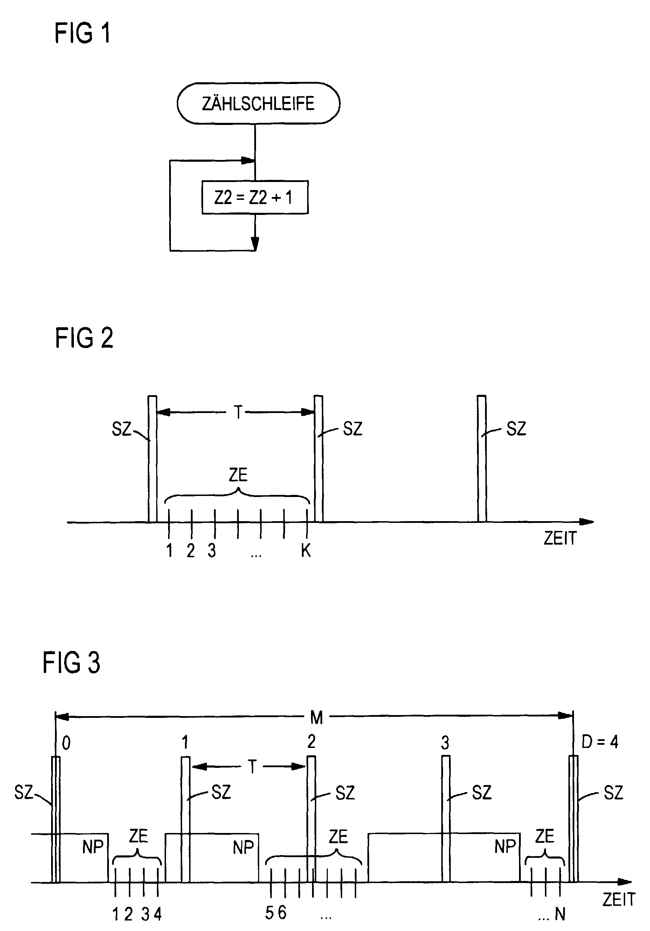

Fig 1 zeigt ein Flußdiagramm einer als Zählschleife verwendeten Programmschleife, in der die Programmschleifendurchläufe gezählt werden. Der jeweilige Zählerstand wird dabei von einer Programmvariablen Z2 angegeben, die bei jedem Programmschleifendurchlauf um eins erhöht wird.

Die Zählschleife ist erfindungsgemäß als ein vom Echtzeitsystem auszuführender Anwenderprozeß realisiert, dem eine Priorität zugewiesen ist, die zwischen einer Priorität von durch das Echtzeitsystem zu verarbeitenden Nutzprozessen und einer Priorität eines betriebssystemeigenen Idle-Prozesses liegt. Damit wird die Zählschleife immer dann ausgeführt, wenn keine auszuführenden Nutzprozesse vorliegen, d.h. das Echtzeitsystem im Leerlaufzustand ist. Eine Ausführung der Zählschleife behindert somit in keiner Weise eine Verarbeitung von Nutzprozessen. Die Zählschleife ist in diesem Zusammenhang nicht als Nutzprozeß sondern vielmehr als benutzerdefinierter IdleProzeß aufzufassen, der im Leerlaufzustand ausgeführt wird. Wird eine Ausführung der Zählschleife durch einen Nutzprozeß unterbrochen, bleibt der Wert der Programmvariahlen Z2 bis zur Wiederaufnahme der Ausführung erhalten, d.h. die Programmvariable Z2 wird bei Wiederaufnahme der Ausführung ausgehend vom letzten Zählerstand weitergezählt.

Fig 2 veranschaulicht den zeitlichen Ablauf einer Kalibrierung der Zählschleife durch einen Systemzeitgeber. Auf einer von links nach rechts verlaufenden Zeitachse sind dabei in periodischen Zeitabständen T vom Systemzeitgeber gebildete Signale SZ dargestellt. Als Zeitgebersignal SZ kann vorteilhafterweise ein durch den Systemzeitgeber in periodischen Zeitabständen ausgelöster, sogenannter Systeminterrupt genutzt werden. Die Kalibrierung wird beim Hochlauf des Echtzeitsystems durchgeführt, solange keine Nutzprozesse vom Echtzeitsystem ausgeführt werden.

Die Kalibrierung wird durch ein Zeitgebersignal SZ ausgelöst, wodurch die Programmvariable Z2 auf den Wert Null gesetzt wird und die Zählschleife als Anwenderprozeß gestartet wird. Jeder Programmschleifendurchlauf 1,2,3,...,K wird daraufhin als Zählereignis ZE von der Zählschleife gezählt bis die Ausführung der Zählschleife durch das nächste gebildete Zeitgebersignal SZ beendet wird. Der bei Beendigung der Zählschleife aktuelle Wert der Programmvariablen Z2 wird daraufhin als Kalibrierungszählergebnis K gespeichert. Aus dem Kalibrierungszählergebnis K ergibt sich die Dauer eines Programmschleifendurchlaufes zu T/K.

Fig 3 veranschaulicht den zeitlichen Ablauf bei einer Messung der Systemlast im Echtzeitsystem. Auf einer von links nach rechts verlaufenden Zeitachse sind diejenigen Zeitintervalle NE dargestellt, in denen Nutzprozesse vom Echtzeitsystem ausgeführt werden. Die Systemlast wird während eines Meßzeitintervalls M gemessen, dessen Beginn und Ende jeweils durch Signale SZ des Systemzeitgebers bestimmt werden. Zu Beginn des Meßzeitintervalls M wird ein erster, die Systemzeitgebersignale SZ zählender Zähler auf Null gesetzt, der in Folge bei jedem Systemzeitgebersignal SZ um eins hochgezählt wird. Das Ende des Meßzeitintervalls M ist erreicht, wenn der Zählerstand des ersten Zählers einen vorgebbaren Wert D erreicht. In Fig 3 sind die Systemzeitgebersignale SZ innerhalb des Meßzeitintervalls M entsprechend dem Zählerstand des ersten Zählers von 0 bis D durchnumeriert. D ist im vorliegenden Ausführungsbeispiel durch den Wert 4 gegeben. Alternativ zu einer Vorgabe eines maximalen Zählerstandes D kann auch das Meßzeitintervall M selbst vorgegeben sein und der Zählerstand D erst am vorgegebenen Ende des Meßzeitintervalls M bestimmt werden.

Das Meßzeitintervall M sollte in der Praxis so groß gewählt werden, daß einerseits ein statistisch signifikanter Wert für die Systemlast bestimmt werden kann und andererseits die für deren Bestimmung benötigte Zeitdauer noch akzeptabel bleibt.

Mit dem Beginn des Meßzeitintervalls M wird die Programmvariable Z2 auf den Wert Null gesetzt und die Zählschleife als Anwenderprozeß mit einer Priorität, die zwischen der Priorität von Nutzprozessen und der Priorität eines betriebssystemeigenen Idle-Prozesses liegt, beim Echtzeitsystem zur Ausführung angemeldet. Aufgrund der gewählten Priorität des Zählschleifenprozesses, wird die Zählschleife genau während der Leerlaufphasen des prozessorgesteuerten Systems durchlaufen, wobei jeder Programmschleifendurchlauf 1,2,3,...,N als Zählereignis ZE gezählt wird. Wird die Ausführung der Zählschleife wegen auszuführender Nutzprozesse unterbrochen, bleibt der momentan erreichte Zählerstand in der Programmvariablen Z2 erhalten. Am Ende des Meßzeitintervalls M wird der bis dahin erreichte Zählerstand der Programmvariablen Z2 als Leerlaufzählergebnis N ausgelesen. N ist damit ein direktes Maß für die Verweildauer des prozessorgesteuerten Systems im Leerlaufzustand. Da die Zählschleife sehr einfach aufgebaut ist, erlaubt sie eine sehr hohe Zählfrequenz und damit eine sehr genaue Zeitmessung.

Zusammen mit dem Kalibrierungszählergebnis K kann damit die Systemlast als $P = 1 - N/(D*K)$ bestimmt werden. Die Auswertung dieser Rechenvorschrift wird zweckmäßigerweise von einem Prozessor des Echtzeitsystems durchgeführt. Da das Ergebnis unabhängig von den Taktfrequenzen des Echtzeitsystems und des Systemzeitgebers ist, kann das Verfahren ohne Modifikation auf unterschiedlichen Hardwareplattformen eingesetzt werden.

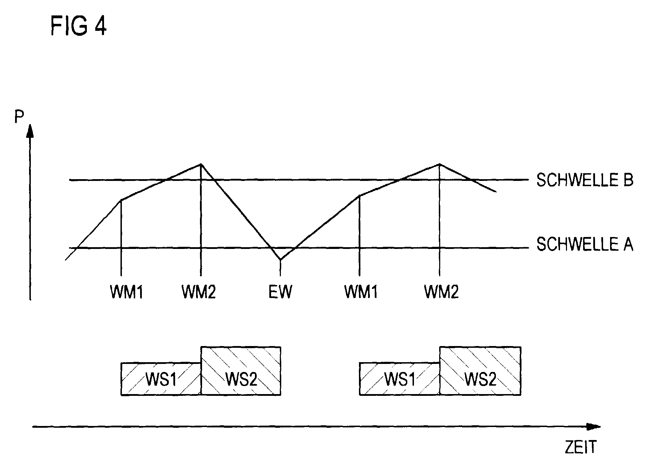

Mittels des erfindungsgemäßen Verfahrens kann die Systemlast kontinuierlich überwacht werden. Fig 4 veranschaulicht einen typischen Zeitablauf bei einer solchen kontinuierlichen Systemlastüberwachung. Die als P bezeichnete Systemlast ist dabei gegen eine von links nach rechts verlaufende Zeitachse aufgetragen.

Zur kontinuierlichen Überwachung der Systemlast wird diese in aneinandergrenzenden Meßzeitintervallen gemessen, wobei jeder gemessene Systemlastwert mit vorgegebenen Schwellenwerten A und B verglichen wird. Überschreitet dabei der gemessene Systemlastwert den Schwellenwert A bzw. B, wird eine Warnmeldung WM1 bzw. WM2 ausgegeben, wodurch eine Warnstufe WS1 bzw. WS2 für das Echtzeitsystem ausgelöst wird. Mit jeder Warnstufe WS1, WS2 werden spezifische Maßnahmen, zur Reduzierung der Systemlast, wie z.B. ein Abweisen von Nutzprozessen geringer Priorität, aktiviert. Falls der gemessene Systemlastwert den Schwellenwert A wieder unterschreitet, wird eine Entwarnungsmeldung EW ausgegeben, wodurch die mit den Warnstufen WS1 oder WS2 aktivierten Maßnahmen wieder deaktiviert werden.

**Patentansprüche**

1. Verfahren zur Systemlastmessung in prozessorgesteuerten Systemen, bei dem

    a) während eines Meßzeitintervalls (M)

        i) in periodischen Zeitabständen (T) gebildete Signale (SZ) eines Systemzeitgebers durch einen ersten Zähler und
        ii) in Leerlaufphasen des prozessorgesteuerten Systems periodisch stattfindende Zählereignisse (ZE) durch einen zweiten Zähler gezählt werden, und

    b) aus dem Zählergebnis (D) des ersten Zählers als Maß für die Dauer des Meßzeitintervalls und dem Zählergebnis des zweiten Zählers (N) als Maß für die Dauer, die das prozessorgesteuerte System während des Meßzeitintervalls (M) im Leerlaufzustand verweilt, die Systemlast des prozessorgesteuerten Systems bestimmt wird.

2. Verfahren nach Anspruch 1,
    **dadurch gekennzeichnet**,

        daß der zweite Zähler durch eine in den Leerlaufphasen ablaufende Programmschleife realisiert ist, durch die während der Leerlaufphasen stattfindende Programmschleifendurchläufe als Zählereignisse (ZE) gezählt werden.

3. Verfahren nach Anspruch 2,
    **dadurch gekennzeichnet**,

        daß die Programmschleife in einen Idle-Prozeß des prozessorgesteuerten Systems integriert ist.

4. Verfahren nach Anspruch 3,
    **dadurch gekennzeichnet**,

        daß der Idle-Prozeß mit integrierter Programmschleife als Anwenderprozeß mit geringerer Priorität als durch das prozessorgesteuerte System zu verarbeitende Nutzprozesse realisiert ist.

5. Verfahren nach Anspruch 3 oder 4,
    **dadurch gekennzeichnet**,

        daß der Idle-Prozeß mit integrierter Programmschleife als Anwenderprozeß mit höherer Priorität als ein betriebssystemeigener Idle-Prozeß realisiert ist.

6. Verfahren nach einem der vorhergehenden Ansprüche,
    **dadurch gekennzeichnet**,

        daß während einer mindestens ein Zeitintervall (T) zwischen zwei Signalen (SZ) des Systemzeitgebers umfassenden Leerlaufphase des prozessorgesteuerten Systems diejenigen Zählereignisse (ZE), die zwischen zwei Signalen (SZ) des Systemzeitgebers stattfinden, durch den zweiten Zähler gezählt werden, um dessen Zählfrequenz bezüglich des Systemzeitgebers zu kalibrieren und das Zählergebnis (K) bei einer nachfolgenden Systemlastbestimmung zu verwenden.

7. Verfahren nach Anspruch 6,
    **dadurch gekennzeichnet**,

        daß die Kalibrierung während einer Leerlaufphase beim Hochlauf des prozessorgesteuerten Systems durchgeführt wird.

8. Verfahren nach Anspruch 6 oder 7,
    **dadurch gekennzeichnet**,

        daß die Systemlast nach der Rechenvorschrift
        $P = 1 - (m \cdot N)/(K \cdot D)$ bestimmt wird, wobei
        P die Systemlast,
        D das während des Meßzeitintervalls erhaltene Zählergebnis des ersten Zählers,
        N das während des Meßzeitintervalls erhaltene Zählergebnis des zweiten Zählers,
        m die Anzahl der Systemzeitgeberperioden zwischen den zur Kalibrierung genutzten Signalen des Systemzeitgebers und
        K das bei der Kalibrierung erhaltene Zählergebnis des zweiten Zählers angibt.

9. Verfahren nach einem der vorhergehenden Ansprüche,

**dadurch gekennzeichnet**,

daß Beginn und Ende des Meßzeitintervalls (M) durch Signale (SZ) des Systemzeitgebers bestimmt werden.

**10.** Verfahren nach einem der vorhergehenden Ansprüche,
**dadurch gekennzeichnet**,

daß die gemessene Systemlast mit mindestens einem vorgebbaren Schwellenwert (A, B) verglichen wird und abhängig vom Vergleichsergebnis eine spezifische Systemmeldung (WM1, WM2, EW) ausgegeben wird.

**11.** Verfahren nach Anspruch 10,
**dadurch gekennzeichnet**,

daß durch die spezifische Systemmeldung eine Maßnahme zur Verringerung der Systemlast initiiert oder deaktiviert wird.

**12.** Verfahren nach einem der vorhergehenden Ansprüche,
**dadurch gekennzeichnet**,

daß die Systemlast in aufeinanderfolgenden Meßzeitintervallen (M) gemessen wird und die erhaltenen Werte der Systemlast fortlaufend protokolliert werden.

**13.** Verfahren nach einem der vorhergehenden Ansprüche,
**dadurch gekennzeichnet**,

daß die Systemlast in aufeinanderfolgenden Meßzeitintervallen (M) gemessen wird und aus den erhaltenen Werten der Systemlast ein Extremalwert der Systemlast bestimmt wird.

**14.** Verfahren nach einem der vorhergehenden Ansprüche,
**dadurch gekennzeichnet**,

daß die Systemlast in einem prozessorgesteuerten Echtzeitsystem bestimmt wird.

**15.** Verfahren nach einem der vorhergehenden Ansprüche,
**dadurch gekennzeichnet**,

daß die Systemlast in mindestens einem prozessorgesteuerten Teilsystem eines prozessorgesteuerten Systems bestimmt wird.

FIG 1

```
        ┌─────────────────────┐
        │   ZÄHLSCHLEIFE      │
        └─────────────────────┘
                   │
         ┌─────────┼
         │  ┌─────────────────┐
         │  │   Z2 = Z2 + 1   │
         │  └─────────────────┘
         │         │
         └─────────▼
```

FIG 2

$$SZ \qquad T \qquad SZ \qquad\qquad SZ$$

$$ZE$$

$$1 \quad 2 \quad 3 \quad \dots \quad K \qquad\qquad ZEIT$$

FIG 3

$$M$$

0          1          2          3          D = 4

SZ      SZ      T      SZ      SZ      SZ

NP      ZE      NP      ZE      NP      ZE

1 2 3 4      5 6      ...      ... N      ZEIT

FIG 4